# EUROPEAN PATENT SPECIFICATION

(11) **EP 1 605 478 B1**
(45) Date of publication and mention of the grant of the patent: **29.08.2007**
(21) Application number: 05017873.0
(22) Date of filing: 28.12.2000
(51) Int. Cl.: H01G 4/30, H01G 4/232

(54) **Multilayer ceramic capacitor for three-dimensional mounting**
Keramischer Vielschichtkondensator für dreidimensionale Montage
Condensateur céramique multicouche pour montage tridimensionel

(43) Date of publication of application: 14.12.2005
(62) Divisional of application: 00128609.5
(73) Proprietor: TDK Corporation, Tokyo 103-8272 (JP)
(72) Inventor: Ahiko, Taisuke, c/o TDK-MCC Corporation, Akita-ken, 018-0402 (JP); Togashi, Masaaki, c/o TDK- Corporation, Chuo-ku, Tokyo, 103-8272 (JP)
(74) Representative: Vossius & Partner

(56) References cited:
- EP-A- 0 351 343
- PATENT ABSTRACTS OF JAPAN vol. 1997, no. 10, 31 October 1997 (1997-10-31) & JP 09 148174 A (ROHM CO LTD), 6 June 1997 (1997-06-06)
- PATENT ABSTRACTS OF JAPAN vol. 016, no. 255 (E-1214), 10 June 1992 (1992-06-10) & JP 04 056207 A (MARCON ELECTRON CO LTD), 24 February 1992 (1992-02-24)
- PATENT ABSTRACTS OF JAPAN vol. 1996, no. 02, 29 February 1996 (1996-02-29) & JP 07 272975 A (TDK CORP), 20 October 1995 (1995-10-20)

## Description

The present invention relates to a multilayer ceramic capacitor for three-dimensional mounting suitable for mounting in a personal computer or other electronic apparatus with a high operating frequency as a low equivalent serial inductance (ESL) and low equivalent serial resistance (ESR) capacitor and suitable for mounting on a three-dimensional multilayer printed circuit board.

In the past, as multiterminal multilayer ceramic capacitors, for example the capacitor disclosed in U.S. Patent No. 5880925 is known. This capacitor has a capacitor body which has two types of, that is, first and second, internal electrodes and dielectric layers stacked to sandwich them. Each of these internal electrodes is formed with a rectangular main portion pattern extending in the longitudinal direction on a face of a rectangular ceramic layer and a plurality of lead patterns extending from the sides of the main portion to the sides of the ceramic layer. The lead patterns of the first internal electrodes and the lead patterns of the second internal electrodes are formed at different positions from each other when seen from a plan view. A plurality of external electrodes are formed at the side faces of the long and short sides of the capacitor body of this multiterminal multilayer ceramic capacitor.

This multiterminal multilayer ceramic capacitor is placed on the surface of a circuit board so that the external electrodes are positioned in a standing direction from the surface of the circuit board. The stacking direction of the internal electrodes and the ceramic layers are substantially vertical to the circuit board. The external electrodes are joined and fixed by soldering to the lands of the circuit pattern of the circuit board so as to mount the capacitor on the surface of the circuit board.

In this type of multilayer ceramic capacitor, however, since the stacking direction of the internal electrodes and the ceramic layers is made to register with the height direction of the capacitor for the surface mounting, if the number of ceramic layers stacked is increased from the electrical characteristics required, the height of the electronic devices cannot be kept low.

Note that as multilayer electronic devices for surface mounting by bringing the stacking direction of the ceramic layers into register with the height direction of the multilayer electronic device, in addition to the one of U.S. Patent No. 5880925, there are many known such as those disclosed in JP-B-64-10927, JP-A-7-161568, JP-A-7-1369649, JP-A-7-169651, JP-A-8-124800, JP-A-9-148174, JP-U-6-7228, JP-B-62-35257, and JP-B-63-38856. In a multilayer electronic device for surface mounting by bringing the stacking direction of the ceramic layers into register with the height direction of the multilayer electronic device, there is the problem that, if the number of ceramic layers stacked is increased from the electrical characteristics required, it is not possible to keep low the height of the electronic device.

In personal computers and other electronic apparatuses, however, the operating frequency has increased from 500 MHz to 1 GHz. The power supply circuit is required to be a low ESL and low ESR multilayer ceramic capacitor. Further, in view of the increasingly smaller sizes of electronic apparatuses, a multiterminal multilayer ceramic capacitor which keeps the height dimension low, enables reliable surface mounting on a three-dimensional printed circuit board etc., and gives predetermined characteristics has been demanded.

If three-dimensionally mounting a conventional multiterminal multilayer ceramic capacitor on a three-dimensional multilayer printed circuit board etc., however, the circuit pattern formed on the circuit board becomes longer, the detouring of the lands becomes longer, and there is a detrimental effect on the inductance component. In particular, a circuit pattern comprised of lands at upper positions and lands at lower positions becomes longer, the detouring of the lands becomes longer and has a detrimental effect on the inductance component, and generation of noise becomes unavoidable.

Further, if surface mounting the conventional capacitor near the terminals of a semiconductor etc. to lower the ESL, there is the problem that the effect of the inductance component due to the detouring of the lands cannot be ignored. Further, in a conventional capacitor, as explained above, the height dimension of the capacitor itself cannot be kept low no matter what the number of layers stacked. From this, the conventional capacitor is not suited for three-dimensional mounting.

Note that as shown in JP-A-57-60827 and JP-G-2657953, a capacitor in which the stacking direction of the ceramic layers is brought into register with the planar direction of the circuit board on which the multilayer ceramic capacitor is to be surface mounted has been proposed. The capacitors disclosed in these publications, however, has the problems that the capacitors cannot be three-dimensionally mounted and the ESR and/or ESL of the external circuits connected to the capacitors easily become large.

EP-A-0 351 343 discloses a multilayer capacitor with external electrodes mutually separated in the same row, so that this capacitor cannot be three-dimensionally mounted, and the ESR and/or ESL of the external circuits connected to the capacitors become large.

JP-09-148174A discloses a capacitor in which the stacking direction of the ceramic layers register with the height direction, i.e. the stacking direction of the ceramic layers is not perpendicular to the height direction. Furthermore, in said known capacitor, the height is obviously longer than the length in the stacking direction.

An object of the present invention is to provide a multilayer ceramic capacitor for three-dimensional mounting suitable for mounting in a personal computer or other electronic apparatus with a high operating frequency as a low ESL and low ESR capacitor, enabling the height dimension to be kept low regardless of the number of ceramic layers, and suitable for mounting on a three-dimensional multilayer printed circuit board.

This object is achieved with the features of the claims. According to the present invention, it is possible to shorten the height dimension of the capacitor body regardless of the number of ceramic layers stacked. As a result, it is possible to shorten the distance between the external electrodes formed on the top face of the capacitor body and the external electrodes formed on the bottom face and possible to reduce the total inductance due to detouring of the lands even if the capacitor is placed on a multilayer board. Further, the lands formed on the multilayer board can be simplified. Therefore, the capacitor is suited for mounting in personal computers and other electronic apparatuses with high operating frequencies as a low ESL and low ESR capacitor. Further, the capacitor is structured to have a low height dimension and have electrodes on the top and bottom faces of the capacitor, is suitable for mounting buried in a three-dimensional multilayer printed circuit board etc.

The capacitor of the present invention enables realization of a three-terminal capacitor by arranging a pair of second external electrodes at the top face or bottom face of the capacitor body at a distance substantially corresponding to the short sides of the ceramic layer. In this capacitor" the pitch between the second external electrodes provided in the same plane of the ceramic body can be shortened. Therefore, even if the capacitor is mounted on a multilayer board, the total inductance due to the detouring of the lands can be reduced more and the lands formed on the multilayer board can be simplified.

These and other objects and features of the present invention will be explained in further detail with reference to the attached drawings, in which:
FIG. 1 is a perspective view of a three-terminal multilayer ceramic capacitor for three-dimensional mounting according to an embodiment of the present invention in a state showing the internal structure;
FIG. 2 is an explanatory view of the pattern shape of the internal electrodes constituting the three-terminal multilayer ceramic capacitor for three-dimensional mounting according to this embodiment;
FIG. 3 is a perspective view of the appearance including external electrodes of the three-terminal multilayer ceramic capacitor for three-dimensional mounting according to this embodiment;
FIG. 4 is an explanatory view of a sandwiched mounting structure of a three-terminal multilayer ceramic capacitor for three-dimensional mounting according to this embodiment in a multilayer board;

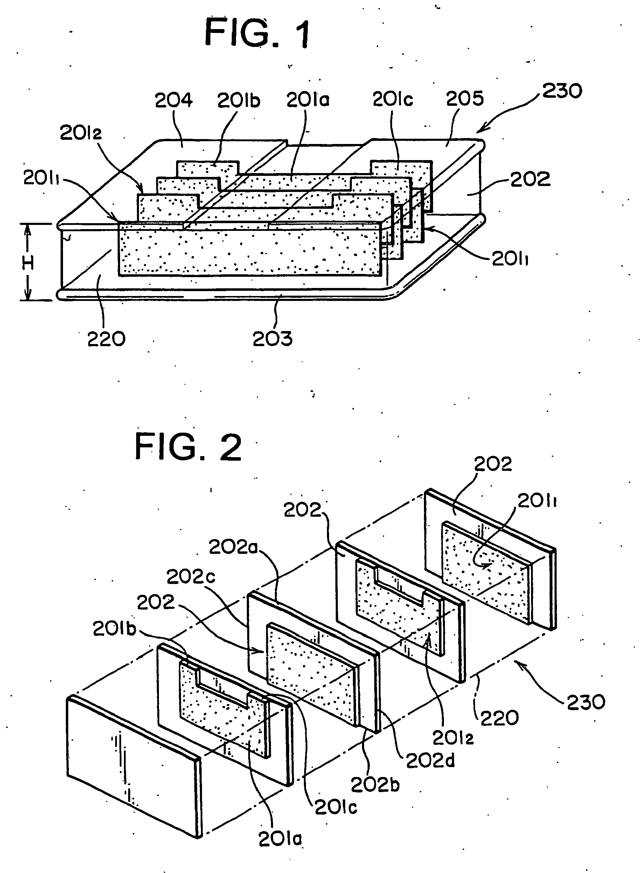

Next, as shown in FIG. 1 to FIG. 4, the multilayer ceramic capacitor 230 for three-dimensional mounting according to the illustrated embodiment has a capacitor body 220 of a rectangular parallelopiped shape. The capacitor body 220, as shown in FIG. 1 and FIG. 2, is comprised of a plurality of first internal electrodes 201₁ and second internal electrodes 201₂ of predetermined patterns alternately stacked in the horizontal direction in the illustration via ceramic layers 202 formed in rectangular shapes. That is, in the present embodiment, as shown in FIG. 1 and FIG. 2, the plurality of first internal electrodes 201₁ and second internal electrodes 201₂ are stacked in the horizontal direction via ceramic layers 202 so that the short sides of the ceramic layers 202 register with the height direction of the capacitor body 220. Note that at least one ceramic layer 202 not formed with an internal electrode may be stacked at the two end faces of the body 220 in the stacking direction.

As shown in FIG. 2, each first internal electrode 201₁ has a rectangular first main portion positioned in a first face (surface) of the ceramic layer 202. Only a lower (first) long side of the first main portion exposes at the bottom surface of the body 220 along a first long side 202b of ceramic layer 202. The longitudinal and lateral dimensions of the first electrode 201₁ are set so that the other long side and two short sides of the first electrode 201₁ do not reach the second long side 202a and two short sides 202c and 202d of the ceramic layer 202. The lateral width of the first electrode 201₁ may be a dimension of the same extent as the lateral width of the ceramic layer 202. Either of the short sides of the first electrode 201₁ may be exposed along the short sides 202c and 202d of the ceramic layer 202.

Further, each second internal electrode 201₂ has a rectangular second main portion 201a along the longitudinal direction in a rear face (second face) opposite to the first main portion of the first internal electrode 201₁ across the ceramic layer 202. The second main portion 201a is formed with a pair of leads 201b and 201c exposed by extending from the upper (second) long side to the second long side 202a of the ceramic layer 202. These leads 201b and 201c are formed so as to project out upward from the two end of the long side of the rectangular second main portion 201a.

The longitudinal and lateral dimensions of the second electrode 201₂ are set so that the other long side and two short sides of the second main portion 201a of the second electrode 201₁ do not reach the first long side 202b and two short sides 202c and 202d of the ceramic layer 202. The lateral width of the second electrode 201₂ however may be a dimension of the same extent as the lateral width of the ceramic layer 202. Either of the short sides of the second electrode 201₂ may be exposed along the short sides 202c and 202d of the ceramic layer 202.

As shown in FIG. 1 and FIG. 2, in the present embodiment, inside the body 220, internal electrodes 201₁ and 201₂ are stacked and arranged alternately at different locations in the vertical direction through ceramic layers 202.

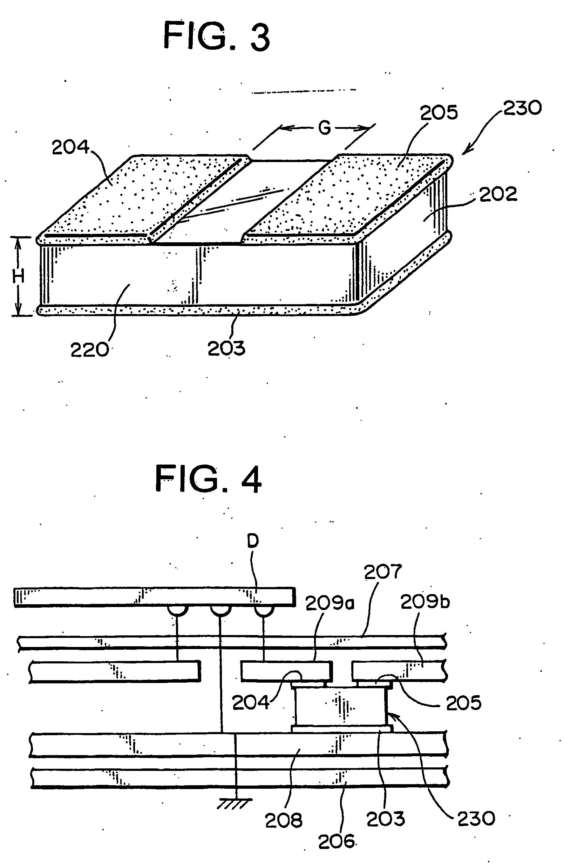

As shown in FIG. 3, the bottom face of the capacitor body 220 has attached to it a first external electrode 203 so as to be electrically connected to a first internal electrodes 201₁ having long side exposed along a first long side 202b of the ceramic layer 202. The top face of the capacitor body 220 has attached to it a pair of second external electrodes 204 and 205 so as to be electrically connected to second internal electrodes 201₂ having leads 201b and 201c exposed along a second long side 202a of the ceramic layer 202. The external electrode 203 is preferably formed over the entire bottom face of the capacitor body 220, but does not necessarily have to cover the entire surface. It is also possible to determine the area covered in accordance with the shapes of the lands of the multilayer board on which the capacitor 230 is to be mounted. The area of the first external electrode 203 with respect to the area of the bottom face of the body 220 where the long sides of the first internal electrodes 201₁ are exposed is preferably an area of at least 50 percent.

These internal electrodes 201₁ and 201₂ are formed by coating and baking an Ni or other conductive paste on the surface of a ceramic green sheet and are comprised of Ni or Ni alloy layers etc. Note that the internal electrodes may also be comprised of the base metal Cu, precious metal Pd or a Pd-Ag alloy layer, etc.

The ceramic layer 202 is comprised of a barium titanate-based, titanium-based, zirconate-based, or other ceramic composition. A stack of the ceramic layers 202 and internal electrodes is formed by coating a ceramic paste on a base film or other film surface to make a green sheet, printing a conductive paste on it, then stacking, cutting, and firing the green sheets. After the production of the body 220, the external electrodes are formed and baked on. The external electrodes 203, 204, and 205 specifically can be formed by coating, drying, and baking a Cu paste on the capacitor body 220 to form an underlayer, then covering the underlayer with an Ni and Sn plating layer.

The multilayer ceramic capacitor 230 produced in this way is used for three-dimensional mounting of multiple terminals by directly connecting the first external electrode 203 and the second external electrode 204 and 205 to different circuit patterns of the circuit board and supplying voltages of different polarities to the adjoining external electrodes.

The specific dimensions of the multiterminal multilayer ceramic capacitor of the present embodiment are not particularly limited, but for example are a height of 0.5±0.1 mm, a width of 0.8±0.1 mm, and a length of 1.6±0.1 mm. The thickness of one ceramic layer is not particularly limited, but is for example 4 µm. The shape of the ceramic layer is that of a rectangle of short sides of 0.5±0.1 mm and long sides of 1.6±0.1 mm. The internal electrodes 201₁ and 201₂ may be formed to a thickness of 1.5 to 2.0 µm. The distance "H" between the external electrodes 203 and 204 and the distance "G" between the second electrodes can be set to a width corresponding to the short sides of the ceramic layer, that is, 0.5±0.1 mm.

The three-terminal multilayer ceramic capacitor 230 configured in this way can be mounted sandwiched between facing circuit boards 206 and 207 in a power supply circuit provided with a semiconductor device "D" as shown in FIG. 4. This three-dimensional mounting may be performed in the following way.

That is, the external electrodes 203, 204, and 205 are made to directly face the different circuit patterns 208, 209a, and 209b of the circuit boards 205 and 206 and are electrically connected as a + pole/pole (GND). In this three-dimensional mounting, the height "H" of the capacitor device as a whole can be kept low and, further, the distance between the facing circuit boards 206 and 207 is held narrow. Therefore, the detouring of the lands can be shortened and the effect of the inductance component of the circuit side can be reduced.

To reduce the inductance of the circuit pattern, by burying the multilayer ceramic capacitor 230 having an ESL value of 10 to 20 pH and an ESR value of a low 5 to 7 mΩ, the inductance component of the lands can be ignored. Due to this, if comparing the ESL and ESR of a multilayer ceramic capacitor of the prior art with an electrostatic capacity of 0.22 *µ*F and a multilayer ceramic capacitor according to the present embodiment (same electrostatic capacity as the prior art), if the value of the multilayer ceramic capacitor according to the prior art is 100 percent, the multilayer ceramic capacitor according to the present embodiment can be made a low 2 to 3 percent in value.

This is because in the multilayer ceramic capacitor according to the present embodiment, the distance between external electrodes 203, 204, and 205 can be set short and the height of the capacitor device as a whole can be kept low and the external electrode 203 is broad and connection to the land is easy. Further, even if the capacitor 230 is mounted on a multilayer board, the total inductance due to the detouring of the lands can be reduced and the lands formed on the multilayer board can be simplified.

Note that the present invention is not limited to the above-mentioned embodiment of the present invention and may be changed in various ways within the scope of the present invention as defined by the appended claims.

## Claims

1. A multilayer ceramic capacitor (230) for three-dimensional mounting comprising:
a ceramic layer (202) formed in a rectangular shape;
a first internal electrode (201₁) having a rectangular first main portion extending along a longitudinal direction in a first face of the ceramic layer (202) and having a first long side of the first main portion exposed along a first long side (202b) of said ceramic layer (202);
a second internal electrode (201₂) haying a rectangular second main portion extending along a longitudinal direction in a second face of the ceramic layer (202) opposite to said first face and having a plurality of leads (201b, 201c) extending from a second long side of the second main portion to a second long side (202a) of said ceramic layer (202);
a rectangular parallelopiped shaped capacitor body (220) having a width, length and height and comprised of a plurality of first internal electrodes (201₁) and second internal electrodes (201₂) stacked via ceramic layers (202) so that the short sides of the ceramic layers (202) register with the height direction of the capacitor body (220), and the long sides of the ceramic layers (202) register with the width direction;
a first external electrode (203) formed at a top face or bottom face of said capacitor body (220) and electrically connected to the first internal electrode (201₁) exposed along the first long side (202b) of the ceramic layer (202); and
second external electrodes (204, 205) formed at the top face or bottom face of the capacitor body (220) and electrically connected to the leads exposed along the second long side (202a) of the ceramic layer (202);
the stacking direction of the ceramic layers (202) and the height direction of the ceramic layers (202) of the capacitor body (220) are perpendicular;
the length of the capacitor body (220) register with the stacking direction and is longer than the height of the capacitor body (220);
**characterized in that** the first external electrode (203) and the second external electrodes (204, 205) are formed continuously in the stacking direction of the ceramic layers in the top face and the bottom face of said capacitor body (202); and
said first external electrode (203) is connectable to a first circuit pattern outside of said capacitor body (220) and said second external electrodes (204, 205) are connectable to a second circuit pattern different from said first circuit pattern.

2. The multilayer ceramic capacitor (230) for three-dimensional mounting as set forth in claim 1, wherein the plurality of second external electrodes (204, 205) are arranged at the top face or bottom face of the capacitor body (220) at a distance substantially corresponding to the short sides of the ceramic layer (202).

3. The multilayer ceramic capacitor (230) as set forth in claim 1 or 2, wherein the multilayer ceramic capacitor (230) is buriable in a three-dimensional circuit board.

## Patentansprüche

1. Vielschicht-Keramikkondensator (230) für eine dreidimensionale Montage, mit:
einer rechteckigen Keramikschicht (202);
einer ersten Innenelektrode (201₁) mit einem rechteckigen ersten Hauptabschnitt, der sich entlang einer Längsrichtung in einer ersten Fläche der Keramikschicht (202) erstreckt, wobei eine erste lange Seite des ersten Hauptabschnitts entlang einer ersten langen Seite (202b) der Keramikschicht (202) freiliegt;
einer zweiten Innenelektrode (201₂) mit einem rechteckigen zweiten Hauptabschnitt, der sich entlang einer Längsrichtung in einer der ersten Fläche gegenüberliegenden zweiten Fläche der Keramikschicht (202) erstreckt und mehrere Anschlußabschnitte (201b, 201c) aufweist, die sich von einer zweiten langen Seite des zweiten Hauptabschnitts zu einer zweiten langen Seite (202a) der Keramikschicht (202) erstrecken;
einem quaderförmigen Kondensatorkörper (220) mit einer Breite, einer Länge und einer Höhe, wobei der Kondensatorkörper mehrere erste Innenelektroden (201₁) und zweite Innenelektroden (201₂) aufweist, die durch Keramikschichten (202) stapelförmig angeordnet sind, so dass die kurzen Seiten der Keramikschichten (202) mit der Höhenrichtung des Kondensatorkörpers (220) und die langen Seiten der Keramikschichten (202) mit der Breitenrichtung ausgerichtet sind;
einer ersten Außenelektrode (203), die an einer Oberseite oder einer Unterseite des Kondensatorskörpers (220) ausgebildet und mit der ersten Innenelektrode (201₁) verbunden ist, die entlang der ersten langen Seite (202b) der Keramikschichten (202) freiliegt; und
zweiten Außenelektroden (204, 205), die an der Oberseite oder der Unterseite des Kondensatorkörpers (220) ausgebildet und mit Anschlußabschnitten elektrisch verbunden sind, die entlang der zweiten langen Seite (202a) der Keramikschicht (202) freiliegen;
wobei die Stapelrichtung der Keramikschichten (202) und die Höhenrichtung der Keramikschichten (202) des Kondensatorkörpers (220) senkrecht zueinander verlaufen; und
die Länge des Kondensatorkörpers (220) sich in der Stapelrichtung erstreckt und größer ist als die Höhe des Kondensatorkörpers (220);
**dadurch gekennzeichnet, dass**
die erste Außenelektrode (203) und die zweiten Au-ßenelektroden (204, 205) in der Stapelrichtung der Keramikschichten an der Oberseite und der Unterseite des Kondensatorkörpers (202) kontinuierlich ausgebildet sind; und
die erste Außenelektrode (203) mit einem ersten Schaltungsmuster außerhalb des Kondensatorkörpers (220) verbindbar ist und die zweiten Außenelektroden (204, 205) mit einem vom ersten Schaltungsmuster verschiedenen zweiten Schaltungsmuster verbindbar sind.

2. Vielschicht-Keramikkondensator (230) nach Anspruch 1, wobei die mehreren zweiten Außenelektroden (204, 205) an der Oberseite oder der Unterseite des Kondensatorkörpers (220) in einem Abstand angeordnet sind, der den kurzen Seiten der Keramikschicht (202) im Wesentlichen entspricht.

3. Vielschicht-Keramikkondensator (230) nach Anspruch 1 oder 2, wobei der Vielschicht-Keramikkondensator (230) in einer dreidimensionalen Leiterplatte versenkbar angeordnet werden kann.

## Revendications

1. Condensateur céramique multicouche (230) pour montage tridimensionnel, comprenant :
une couche de céramique (202) formée en une forme rectangulaire ;
une première électrode interne (201₁) comportant une première partie principale rectangulaire s'étendant le long d'une direction longitudinale dans une première face de la couche de céramique (202) et comportant un premier grand côté de la première partie principale positionné le long d'un premier grand côté (202b) de la couche de céramique (202) ;
une deuxième électrode interne (201₂) comportant une deuxième partie principale rectangulaire s'étendant le long d'une direction longitudinale dans une deuxième face de la couche de céramique (202) à l'opposé de ladite première face et comportant une pluralité de conducteurs (201b, 201c) s'étendant à partir d'un deuxième grand côté de la deuxième partie principale vers un deuxième grand côté (202a) de la couche de céramique (202) ;
un corps de condensateur formé en parallélépipède rectangulaire (220) présentant une largeur, une longueur et une hauteur, et composé d'une pluralité de premières électrodes internes (201₁) et de deuxièmes électrodes internes (201₂) empilées par l'intermédiaire de couches de céramique (202) de sorte que les petits côtés des couches de céramique (202) coïncident avec la direction de la hauteur du corps de condensateur (220), et que les grands côtés des couches de céramique (202) coïncident avec la direction de la largeur ;
une première électrode externe (203) formée sur une face supérieure ou sur une face inférieure dudit corps de condensateur (220) et électriquement connectée à la première électrode interne (201₁) positionnée le long du premier grand côté (202b) des couches de céramique (202) ; et
des deuxièmes électrodes externes (204, 205) formées sur la face supérieure ou sur la face inférieure du corps de condensateur (220) et électriquement connectées aux conducteurs positionnés le long du deuxième grand côté (202a) de la couche de céramique (202),
la direction d'empilement des couches de céramique (202) et la direction de la hauteur des couches de céramique (202) du corps de condensateur (220) étant perpendiculaires,
la longueur du corps de condensateur (220) coïncidant avec la direction d'empilement et étant plus longue que la hauteur du corps de condensateur (220) ;
**caractérisé en ce que** la première électrode externe (203) et les deuxièmes électrodes externes (204, 205) sont formées en continu dans la direction d'empilement des couches de céramique sur la face supérieure et sur la face inférieure dudit corps de condensateur (202) ; et
ladite première électrode externe (203) peut être connectée à un premier tracé de circuit à l'extérieur dudit corps de condensateur (220) et lesdites deuxièmes électrodes externes (204, 205) peuvent être connectées à un deuxième tracé de circuit différent dudit premier tracé de circuit.

2. Condensateur céramique multicouche (230) pour montage tridimensionnel selon la revendication 1, dans lequel la pluralité de deuxièmes électrodes externes (204, 205) sont agencées sur la face supérieure ou sur la face inférieure du corps de condensateur (220) à une distance correspondant sensiblement aux petits côtés de la couche de céramique (202).

3. Condensateur céramique multicouche (230) selon la revendication 1 ou 2, dans lequel le condensateur céramique multicouche (230) peut être enterré dans une carte de circuit imprimé tridimensionnelle.
